# EUROPEAN PATENT SPECIFICATION

(11) **EP 4 176 214 B1**
(45) Date of publication and mention of the grant of the patent: **02.09.2026**
(21) Application number: 20944829.9
(22) Date of filing: 06.07.2020
(51) Int. Cl.: F25B 7/00, F25B 29/00, F25B 30/02, F25B 49/02, F24D 3/18, F24D 5/12, F24D 17/02, F24D 19/10, F25B 25/00, F24H 15/375, F24H 15/38

(54) **HEATING SYSTEM AND METHOD UTILIZING EXTRACTED HEAT**
HEIZSYSTEM UND VERFAHREN MIT VERWENDUNG VON EXTRAHIERTER WÄRME
SYSTÈME DE CHAUFFAGE ET PROCÉDÉ UTILISANT UNE CHALEUR EXTRAITE

(43) Date of publication of application: 10.05.2023
(73) Proprietor: Senera Oy, 01380 Vantaa (FI)
(72) Inventor: MANNER, Mika, 02330 Espoo (FI)
(74) Representative: Papula Oy
(86) International application number: PCT/FI2020/050481
(87) International publication number: WO 2022/008785

(56) References cited:
- CN-A- 110 939 972
- CN-A- 110 939 972
- JP-A- 2010 164 258
- JP-A- 2010 164 258
- US-A1- 2012 210 736
- US-A1- 2012 210 736
- US-A1- 2019 154 309
- US-A1- 2019 154 309

## Description

### TECHNICAL FIELD

This specification relates generally to heat pump-based heating for utilizing lower-temperature condensation heat from a heat extraction system, such as a refrigerator, for producing higher-temperature heat energy for heating purposes. Especially, the specification relates to controlling such heating systems.

### BACKGROUND

In a heating system with a heat pump-based heat production arrangement, condensing heat from a heat pump-based heat extraction arrangement may be used as the heat source. Recently, an increasing interest has been raised on utilizing the condensation heat of refrigerating or freezing devices and systems of e.g. supermarkets for heating the interior of the latter. In such utilization, basically, condensation heat released at the condenser of a heat pump of a heat extraction arrangement at relatively low temperature is collected and transferred to the evaporator of a heat pump of the heating system. The latter heat pump transforms the lower-temperature heat into higher-temperature heat released at the condenser thereof to be used for heating of the building.

In such system, tens of percentages of the annual heating energy demand of, for example, a supermarket may be possible to be covered by the condensation heat released at the condenser(s) of the refrigerating or freezing appliance(s) of the same.

One challenge in such approach is the temporally varying and not easily predictable supply of the condensation heat power. The condensation heat power available depends naturally, for example, on the changes in the amount and temperature of foodstuff contained and/or loaded in the refrigerating or freezing appliances.

One possibility is to use a large-volume water tank as a buffer to equalize the variations in the condensing heat supply. Then, the operation of the heat pump of the heat production arrangement may be adapted to the changes of the condensing heat power available on the basis of changes in the temperature of the tank. However, such tanks are rather expensive elements and require a lot of space. In addition, the temperature of the tank is a secondary and delayed indicator of the condensing heat power available only.

### SUMMARY

This summary is provided to introduce a selection of concepts that are further described below in the Detailed Description. This Summary is not intended to definitely identify key features or essential features of the claimed subject matter, nor is it intended to be used to limit the scope of the claimed subject matter.

In one aspect, a heating system is disclosed for utilizing condensing heat of a heat extraction arrangement, the heat extraction arrangement comprising a first heat pump with a first condenser for releasing condensing heat to a heat transfer fluid at the first condenser at a first temperature.

The heating system comprises a heat production arrangement comprising a second heat pump with a second evaporator and a second condenser, configured to release heat for heating purposes to a heating fluid at the second condenser at a second temperature which is higher than the first temperature.

Further, the heating system comprises a heat collection arrangement for circulating the heat transfer fluid between the first condenser and the second evaporator.

The heating system comprises a control arrangement configured to adjust the operation of the second heat pump on the basis of the condensing heat power available at the first condenser.

In another aspect, a heating method is disclosed for utilizing condensing heat of a heat extraction arrangement having a first heat pump with a first condenser for releasing condensing heat to a heat transfer fluid at the first condenser at a first temperature.

The method comprises collecting the condensing heat released at a first temperature at a first condenser.

The collected condensing heat is transferred to a second evaporator of a second heat pump.

The method further comprises producing, by the second heat pump, heat which is released for heating purposes to a heating fluid at a second temperature higher than the first temperature at the second condenser.

The operation of the second heat pump is automatically adjusted on the basis of the condensing heat power available at the first condenser.

State of the art solutions are represented by US 2019/154309 A1 disclosing a heat pump system with two heat pumps, CN 110 939 972 A disclosing an air conditioning condensation heat and industrial waste heat parallel recovery and heating system, JP 2010 164258 A disclosing a steam generator, and D4: US 2012/210736 A1 disclosing a cascade floating intermediate temperature heat pump system.

### BRIEF DESCRIPTION OF THE DRAWINGS

The accompanying drawings, which illustrate various embodiments, together with the description are intended to explain the principles of various embodiments.
FIG. 1 illustrates, as a schematic drawing not drawn to scale, a heating system utilizing condensing heat of a heat extraction arrangement;
FIG. 2 shows graphs illustrating the principle of controlling a heating system; and
FIG. 3 shows a flow chart of a heating method.

### DETAILED DESCRIPTION

The detailed description provided below not intended to represent the only forms in which the embodiments may be constructed, implemented, or utilized.

The heating system 100 may be used for producing heating energy e.g. for heating the interior of a building such as a supermarket. The heating energy may alternatively, or in addition, to be used to heat domestic water of one or more buildings. In yet another example, it may be used to produce heating energy to be used in some industrial process.

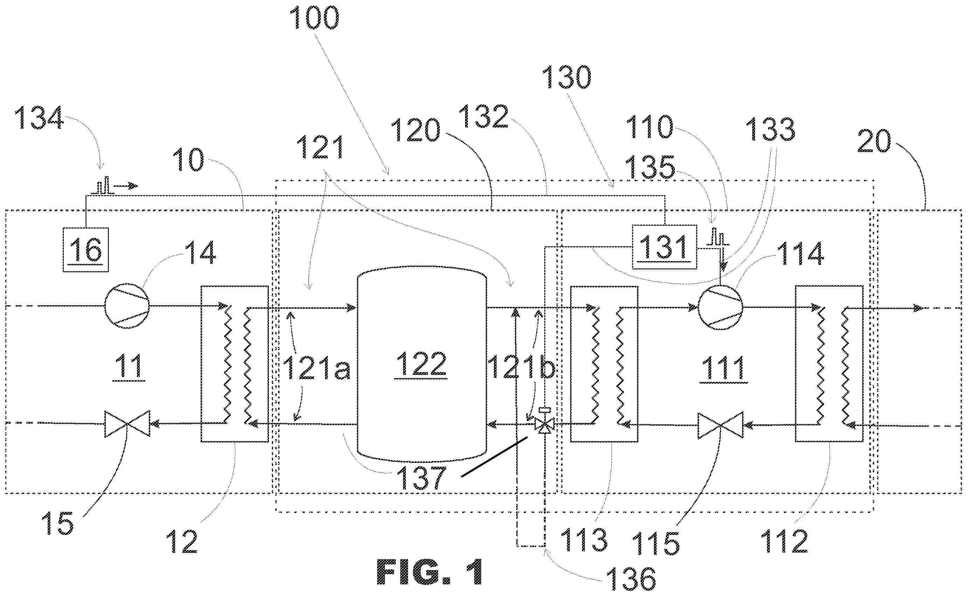

The heating system is designed for utilizing in heat production condensing heat of a heat extraction arrangement 10. In the drawing of FIG. 1, the heat extraction arrangement 10 is illustrated only partially.

"Heat extraction" refers to extracting, i.e. removing, heat energy from an apparatus, space, or process.

"Condensing heat" refers to heat released at a condenser of a heat pump. In the example if FIG. 1, the heat extraction arrangement 10 comprises a first heat pump 11 with a first condenser 12, a first compressor 14, a first expansion valve 15, and a first evaporator (not illustrated).

The heat extraction arrangement 10 may be connected to, or be a part of, a cooling appliance, such as a domestic or commercial refrigerator, freezer, cold-storage room or cold cabinet, for extracting heat therefrom. In other embodiments, a heat extraction arrangement may be configured to extract heat from an industrial process, or from any appropriate space or mass to be cooled. Basically, the heat extraction arrangement may be arranged to extract heat from to any appropriate space or material mass as a target to be cooled.

The first heat pump 11 may be, for example, a CO₂ heat pump with carbon dioxide CO₂ as the refrigerant used in the refrigerant circuit thereof. A CO₂ heat pump operates most efficiently when the CO₂ refrigerant may be condensed at a low temperature. Controlling the operation of the second heat pump and also the heat collection arrangement on the basis of the condensing heat power available at the first condenser may enable optimizing the operation of the CO₂ heat pump. For example, it is possible to circulate the heat transfer fluid between the first condenser and the second evaporator at an increased flow rate, whereby the CO₂ refrigerant may be condensed at a lower condensing temperature.

The first heat pump 11 releases condensing heat to the heat transfer fluid at the first condenser 12 at the first temperature. The first temperature may lie, for example, in the range of 10 to 20 °C.

The heating system 100 comprises a heat production arrangement 110 which comprises a second heat pump 111 with a second condenser 112 and a second evaporator 113. The refrigerant circuit of the second heat pump further comprises a second compressor 114 and a second expansion valve 115.

The second heat pump 111 releases, at the second condenser 112 at a second temperature which is higher than the first temperature, heat to a heating fluid to be used for heating purposes. The heat thereby released is thus "condensing heat", but for the sake of clarity, that term is used in this specification in the context of the condensing heat released at the first condenser only.

The second temperature may lie, for example, in the range of 30 to 60 °C, depending on the heating purpose at issue. For example, for heating domestic water, 50 to 60 °C may be required, whereas 30 to 40 °C may be sufficient for heating the interior of a building. Even higher temperatures such as 80 °C may be required, for example, when supplying the heat produced by the heat production arrangement to a district heating network.

In the example of FIG. 1, there is a heat distribution arrangement 20 (illustrated only partially in the drawing) connected to the heat production arrangement 110 of the heating system 100 for receiving the heat released at the second condenser of the second heat pump. The condensing heat thereby received in a heating fluid such as water circulating in a piping, may then be distributed further as needed in the heating application at issue. For example, the heat released at the second condenser may be further transferred to heat air in an a warm-air heating system. In other embodiments, it may be led to hot-water radiators or to an underfloor heating circuit.

The heating system 100 further comprises a heat collection arrangement 120 connected to the heat production arrangement 110 of the heating system and the heat extraction arrangement 10, thereby connecting those two to each other.

The heat collection arrangement comprises a piping 121 via which the heat collection arrangement is configured to circulate a heat transfer fluid between the first condenser 12 and the second evaporator 113.

"Circulating" refers generally to leading a fluid from some location to another, and back. In the example, of FIG. 1, the heat transfer fluid is led to flow from the first condenser to the second evaporator, and back. Thereby, condensing heat released at the first condenser may be absorbed to the heat transfer fluid at a heat exchanger coupled to, or lying in, the first condenser. The condensing heat thereby collected may then be transferred via the piping 121 to the heat production arrangement 110 and released to the refrigerant of the second heat pump 111 at a heat exchanger coupled to, or lying in, the second evaporator 113.

The heat transfer fluid may be, for example, water or some other liquid suitable for heat transferring purposes.

The heating system thereby utilizes the lower-temperature heat released by the heat extraction arrangement at the first condenser, and converts it into higher-temperature heat released at the second condenser of the second heat pump of the heat production arrangement. The thereby released heat may be used for various heating purposes.

In the example of FIG. 1, the heat collection arrangement 120 further comprises a tank 122 for being filled with the heat transfer fluid. The piping 121 has a primary part 121a circulating the heat transfer from the tank to the first condenser 12, and back to the tank. A secondary part 121b of the piping circulates the heat transfer fluid from the tank to the second evaporator 113, and back to the tank. The heat transfer fluid is thus circulated between the first condenser and the second evaporator indirectly, or in stages, via the two partial circulations.

The tank may serve as a buffer to smoothen or equalizing the changes of the temperature of the heat transfer fluid due to changes in the condensing heat released at the first condenser of the first heat pump of the heat extraction arrangement. The tank may have a volume, for example, of 1 to 2 m³.

In other embodiments, heating systems may be implemented without any separate tank in the heat collection arrangement. Then, the volume of the piping itself may be sufficient for the buffering effect discussed above. In embodiments without any buffering tank, one single piping may directly circulate the heat transfer fluid from the first condenser to the second evaporator. Alternatively, there may be sequential circulations connected to each other via heat exchangers.

In the example of FIG. 1, the primary and secondary parts of the piping together with the tank may be considered to serve as a single circuit for the circulation of the heat transfer fluid. In other embodiments, heat collection arrangements may be implemented with two or more sequential circuits, coupled to each other by heat exchanging arrangements, for several heat transfer circulations. Then, different heat transfer fluids may be circulated in different circuits.

In the example of FIG. 1, the heat collection arrangement further comprises a by-pass circuit 136 by means of which a by-pass flow of the heat transfer fluid may be circulated via an external heat source (not illustrated) to be heated by that, i.e. by heat received from the external heat source. In the example of FIG. 1, the by-pass circuit is connected to the secondary part 121b of the piping, and there is a three-way valve 137 for controlling the by-pass flow. In other embodiments, by-pass circuits may be arranged and positioned differently.

The additional heat source may be, for example, an exhaust air heat recovery arrangement, or any other appropriate arrangement from where heat can be received in the heat transfer fluid in the by-pass flow. One further example is a cooling circuit of a building.

The by-pass flow may comprise a part of the total flow of the heat transfer fluid only, whereby some heat transfer fluid may simultaneously flow via its normal route. Alternatively, the entire floe of the heat transfer fluid may be led to the by-pass flow.

The heat extraction arrangement 10 comprises a first control unit 16 which may be configured to control and/or monitor the operation of the heat extraction arrangement, especially the operation of the first heat pump. As a part of its operation, the first control unit provides one or more electrical signals 134 indicative of the operation of the first heat pump.

An electric "signal" refers basically to any appropriate data entity transmittable electrically along a wired or wireless signal or data transfer connection. A signal may be analogue or digital.

Such electrical signals may be indicative of any appropriate operational parameters of the first heat pump. Especially, they may indicate parameters on the basis of which the condensing heat power available at the first condenser may be determined. Such parameters may include, for example, electrical power consumption of the compressor; and condensing pressure and temperature as well as suction gas pressure and temperature of the refrigerant of the first heat pump.

In some embodiments, the one or more electrical signals may indicate directly the condensing heat power available as the first condenser. Then, "determining" the condensing heat power available by the second control unit may comprise just accepting the ready indicated power information and/or the corresponding signal for the control purposes.

"Available" condensing heat power refers to the instantaneous heat power which, with the prevailing operational state of the first heat pump, can be released from the refrigerant of the first heat pump to the heat transfer fluid in the first condenser. It depends e.g. on the temperature of the apparatus, space, or process from which heat is to be extracted.

The first control unit may be a standard part of an automatic control system of the entire heat extraction unit or of the first heat pump thereof. Alternatively, it may be an additional unit incorporated into, or connected to, the heat extraction arrangement. It may be specifically configured to produce the one or more electrical signals, but it may be carry out any other appropriate operations also.

In other embodiments, heating systems may be implemented for utilizing condensing heat of the first heat pump of an heat extraction arrangement without any first control unit as that described above. Then, the information about the operation of the first heat pump and specifically the condensing heat power available at the first condenser may be provided by some other appropriate means and equipment, possibly in the form of one or more electrical signal(s) such as those discussed above.

The heating system 100 of FIG. 1 comprises a second control unit 131. The second control unit is connected both to the first control unit 16 and the second heat pump 111 by signal transfer connections 132, 133. The connections 132, 133 illustrated by solid lines in the schematic drawing of FIG. 1 may be implemented by means of any appropriate wired of wireless data or signal transfer equipment and components.

The second control unit 131 is configured to receive the one or more electrical signals indicative of the operation of the first heat pump, and determine the condensing heat power available at the first condenser on the basis thereof. The second control unit may then generate appropriate electrical control signal(s) 135 to adjust the operation of the second heat pump. Alternatively, the second control unit may be configured in any other appropriate manner to adjust the operation of the second heat pump on the basis of the one or more electrical signals or the information provided by them on the condensing heat power available at the first condenser.

Thereby, the second control unit 131 and the data transfer connections 132, 133 constitute parts of a control arrangement 130 configured to adjust the heating system 100, especially the second heat pump 111 thereof, on the basis of the condensing heat power available at the first condenser.

In other embodiments, a second control unit may be configured to determine the condensing heat power available at the first condenser in any other appropriate manner. For example, it may be possible to measure the volumetric flow rate of the heat transfer fluid led via the first condenser, and the change of temperature of the heat transfer fluid resulting from receiving the condensing heat. Then, the condensing heat power available at the first condenser may be calculated on the basis of those two parameters. In such approach, no information is needed from the heat extraction arrangement or the first control unit thereof. Then, no signal transfer connection between the second control unit and the first control unit is needed.

"Adjusting" the operation of the second heat pump refers to controlling, especially changing, the operational state of the second heat pump. Basically, the operation of the compressor of a heat pump determines the operation and heat production power of the entire refrigerant circuit of the heat pump. Therefore, in practice, the operation of the second heat pump may be adjusted by adjusting the operation, thus controlling or changing the operational state of, the second compressor.

"Operation" or operational state of a heat pump or a compressor thereof may refer to the power of the compressor, thus to the power level of the compressor, or to whether the compressor is operating or not. In the case of a heat pump with several compressors, it may refer to the number of compressors operating at the same time.

Adjusting the operation of the second heat pump "on the basis of" the available condensing heat power refers to taking the available condensing heat power into account in selecting the way to control or adjust the second heat pump. This means that the available condensing heat power affects the way of adjusting the operation of the second heat pump. However, also some further parameters or factors such as the heating power to be released at the second condenser, or a specific level of the second temperature needed for the heating purposes, may also be taken into account in the adjustment.

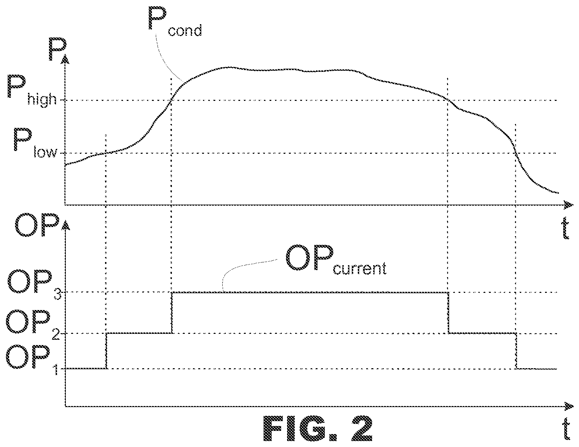

Adjusting the operation of the second heat pump on the basis of the available condensing heat power may thus comprise, or be carried out by, changing the operational state of the second compressor in response to a change in the condensing heat power available at the first condenser. An example of this is discussed below with reference to FIG. 2.

In the example of FIG. 1, the second control unit 131 is also connected to the three-way valve 137, by a signal transfer connection 133 similar to that between the second control unit and the second heat pump. Thereby, the second control unit may control also the three-way valve 137 and thus the by-pass flow of the heat transfer fluid, on the basis of the condensing heat power available at the first condenser. For example, when the condensing heat power available at the first condenser is insufficient for the current need for heating energy, additional heat may be collected from an additional heat source. Any appropriate control signal(s) (not illustrated) may be used in controlling the by-pass flow.

The second heat pump may be of an inverter type. The control arrangement may then adjust the operation of the second heat pump by adjusting the running speed of the second compressor.

In other embodiments, the second heat pump may be of an ON/OFF type. The control arrangement may then adjust the operation of the second heat pump by adjusting the operating time of the second compressor. This may be made by changing the duration of the ON period(s) of the second compressor, thus adjusting the operating time of the second compressor.

The second control unit may a standard part of an automatic control system of the second heat pump. Alternatively, it may be an additional unit incorporated into, or connected to, the heat production arrangement and the second heat pump thereof. In some embodiments, the second control unit may be a remote element carrying out the operation thereof remotely, i.e. at a location at a distance from the second heat pump and the heat production system.

In other embodiments, it is possible to implement different configurations of control arrangements as long as the above principle of controlling by the control arrangement the operation second heat pump on the basis of the condensing heat power available at the first condenser is implemented. For example, the information indicative of the operation of the first heat pump may be provided in any appropriate manner. For example, it may be possible to transmit suitable electrical signals to an external data server or cloud service, from which the control arrangement of a heating system, possibly equipped with a second control unit, may receive such information and use it to adjust the operation of the second heat pump on the basis of the condensing heat power available at the first condenser.

Any of the first and the second control units may be basically implemented in accordance with the principles as such known in the art. To carry out the controlling, monitoring, computing, and other appropriate operations a control unit is "configured to" operate, such control unit may comprise one or more processors coupled with at least one memory. The at least one memory may comprise computer-readable program code instructions which, when executed by the at least one processor, cause the control unit to carry out the operation(s) at issue at least partially automatically. Alternatively, or in addition, at least some of those operations may be carried out, at least partially, by means of some hardware logic elements or components, such as Application-specific Integrated Circuits (ASICs), Application-specific Standard Products (ASSPs), or System-on-a-chip systems (SOCs), without being limited to those examples.

A control unit may be a sub-unit within, or an integral part of, a larger automation unit. In other embodiments, a control unit may be a separate unit appropriately connected to the rest of the arrangement, such as a heat pump.

From another terminology point of view, a control unit being "configured to" perform a specific method operation means actually that the control unit comprises or constitutes at least a part of "means for" performing that operation.

One control unit may comprise separate means for different operations, such as receiving electrical signals and determining and generating a further signal(s) on the basis thereof. Alternatively, any of such means for performing various operations may be combined so that more than one operation is carried out by the same means. It is possible that all those operations are carried out by the same means, e.g. by a single data processing apparatus.

In the example of FIG. 1, the operation of the second heat pump is actively and continuously controlled directly on the basis of the condensation heat power available at the first condenser. Then, weaknesses of indirect controlling on the basis of a secondary indicator or parameter such as the temperature of a buffer tank incorporated in the heat collection arrangement may be avoided or alleviated. The approach of direct controlling enables the control arrangement to make the heat production system react quickly to the changes in the lower-temperature heat source. Then, the overall control of the heating system may be more accurate which may result also in savings in the overall energy consumption of the heating system. Further, the size of the tank used to serve as a buffer for the heat supply from the first condenser may be decreased. It may be even possible to omit the tank from the heat collection system as the volume of the heat transfer fluid in the piping may be sufficient for the buffering purposes.

In the example of Fig. 1, both the heat extraction arrangement and the heat production arrangement comprise one heat pump with one compressor in the refrigerant circuit of the heat pump.

In other embodiments, a heat collection arrangement of a heating system may be configured to collect condensation heat at a plurality of first condensers of a plurality of first heat pumps included in a heat extraction arrangement.

On the other hand, in other embodiments, irrespective of the number of first heat pumps and the first condensers thereof, the heat production arrangement may comprise one or a plurality of heat pumps, each of which may comprise one or a plurality of compressors in its refrigerant circuit. Then, the control arrangement of the heating system may be configured to adjust the operation of any appropriate number of heat pump(s) or the compressor(s) thereof in any appropriate manner, the adjustment being based on the condensing heat power available at the first condenser.

In the example of FIG. 1, the heating system comprises only the heat collection arrangement and the heat production arrangement. In other embodiments, complete heating systems may comprise also a heat extraction arrangement and/or a heat distribution arrangement of any appropriate type, including those of the embodiments discussed above with reference to FIG. 1.

The heating system, the operation and controlling of which is illustrated in FIG. 2 may be in accordance with any of those discussed above with reference to FIG. 1.

In the upper graph of FIG. 2, the x axis represents time *t*, and *y* axis represents condensing heat power P. The graph illustrates example variation of the condensing heat power *P_{cond}* available at the first condenser of a heat extraction arrangement as a function of time.

The range of variation of the available condensing heat power is divided into a low, middle, and high regions. The low region lies below of a lower limit value *P_{low}*, the middle region lies between the lower limit value and a higher limit value *P_{high}*, and the high region lies above the higher limit value. The limit values may be predetermined in any appropriate manner, taking into account the type of the heat extraction arrangement and the typical operational conditions of the first heat pump thereof.

In the lower graph of FIG. 2, the x axis represents time t, and y axis represents the operational state OP of the second heat pump of the heat production arrangement of the heating system. The operational state may refer, for example, to the running speed of an inverter type second heat pump or to the duration of the ON periods of an ON/ OFF type second heat pump. In the case of a second heat pump with several compressors, it may refer also to the number of compressors operating simultaneously. The graph illustrates the changes of the current operation stage *OP_{current}*.

The second control unit of a heat production arrangement of the heating system adjusts the operation of the second heat pump of the heat production arrangement by selecting its operational state from three predetermined alternatives: a first, a second, and a third operational state *OP₁, OP₂, OP₃*. The selection is carried out on the basis of the available condensing heat power *P_{cond}* in the following manner.

With the available condensing heat power lying below the lower limit L_{low}, the second control unit controls the second heat pump to operate in accordance with the first operational state *OP₁*. When the available condensing heat power lies between the lower limit L_{LOW} and the upper limit *L_{high},* the second control unit controls the second heat pump to operate in accordance with the second operational state *OP₂*. With the available condensing heat power lying above the upper limit *L_{low},* the second control unit controls the second heat pump to operate in accordance with the third operational state *OP₃*.

Thereby, the second control unit is configured to adjust the operation of the second heat pump by selecting the operational state of the second compressor on the basis of the condensing heat power available at the first condenser of the first heat pump.

In practice, it may be sufficient to carry out any "adjustment" of the operation of the second heat pump only when the condensing heat power available at the first condenser changes so that one of the lower and the higher limits of the is passed.

It is to be noted that FIG. 2 represents a relatively simple, illustrative example not limiting the possible ways of adjusting the operation of the second heat pump of a heat production arrangement on the basis of the available condensing heat.

In the above, various embodiments are discussed with reference to a system or apparatus aspect. Next, embodiments of a method aspect are discussed.

All the operations of the methods and the various embodiments thereof discussed below may be carried out at least partially automatically. They may be carried out by means of any suitable systems, arrangements, parts, elements, and/or units such as those discussed above with reference to the system aspect. On the other hand, the systems, arrangements, parts, elements, and/or units discussed above in the system aspect may operate in accordance with any of the methods and the various embodiments thereof discussed below.

What is stated above about the details, ways of implementation, preferred features, and advantages with reference to the system aspect apply, *mutatis mutandis,* also to the method aspect discussed hereinafter. The same applies vice versa.

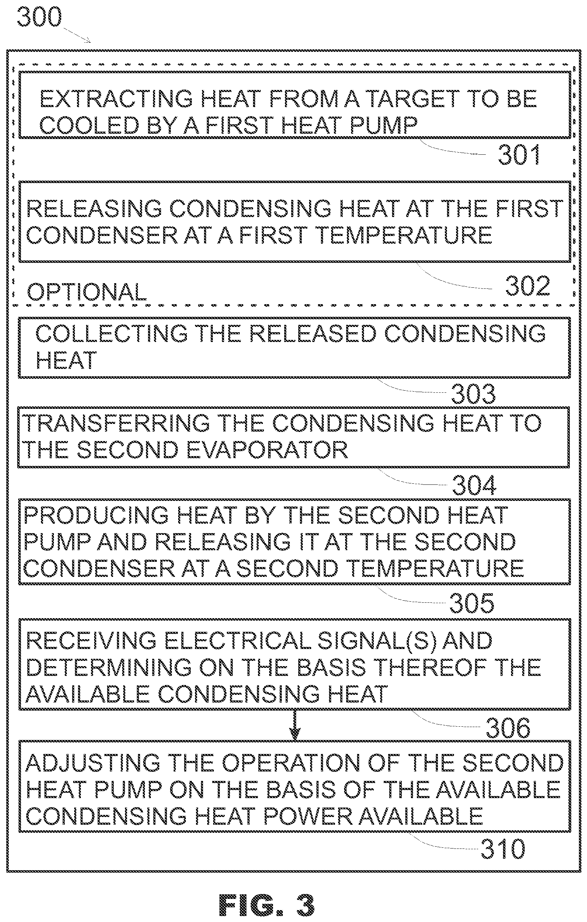

The method 300 of FIG. 3 starts, in operation 301, by extracting heat by a first heat pump from a target, such as a space or material mass, to be cooled.

The space may be, for example, the interior of an equipment such as a container or piping of an industrial process. Respectively, a material mass to be cooled may be any appropriate solid, liquid, or gaseous material which may be stored or conveyed, or may flow, in any appropriate industrial process or natural surroundings.

In yet other embodiments, the space or material mass to be cooled may be the interior of, or material contained in, any appropriate cooling appliance, such as a domestic or commercial refrigerator, a freezer, a cold-storage room, or a cold cabinet.

A heat extraction arrangement comprising the first heat pump may be connected in any appropriate manner to the target to be cooled.

The heat thereby extracted by the first heat pump is received in the refrigerant of the first heat pump and released, in operation 302, as condensing heat at a first condenser of the first heat pump at a first temperature.

In operations 303 and 304, the condensing heat released at the first condenser is collected and further transferred to a second evaporator of a second heat pump.

The collection and transfer of the condensing heat may be carried out, for example, by circulating a flow of a heat transfer fluid such as water between the first condenser and the second evaporator. Then, the condensing heat may be received by the heat transfer fluid at the first condenser and transmitted further to the refrigerant of the second heat pump of the second evaporator.

In other embodiments, the actual heating method may start by collecting the condensing heat by receiving it at the first condenser. Thus, the heat extraction stage of operations 301 and 302 is then not part of the heating method itself.

In operation 305, heat is produced by the second heat pump and released at the second condenser, at a second temperature higher than the first temperature, for heating purposes.

The heat thereby released may be received by any appropriate heat distribution arrangement to be used for any appropriate heating purposes.

During the entire process, the operation of the second heat pump is automatically adjusted, in operation 310, on the basis of the condensing heat power available at the first condenser.

For that purpose, the method comprises, in operation 306, automatically receiving one or more electrical signals indicative of the operation of the first heat pump and automatically determining the condensing heat power available at the first condenser. Then, the operation of the second heat pump may be automatically adjusted on the basis of the condensing heat thereby determined.

In other embodiments, methods may be implemented where, in addition to the operations discussed above, a bypass flow of the heat transfer fluid is circulated so as to be heated by an external heat source. The by-pass flow may be controlled automatically on the basis of the condensing heat power available at the first condenser.

"Automatically" performing one or more operations of the method refers to performing the operation(s) at issue partially or completely automatically by means of one or more appropriate data processing units or modules such as control units in accordance with those discussed above with reference to the system or apparatus aspect. Performing an operation completely automatically refers to carrying out the operation according to predetermined rules and procedures, without need for any contribution provided or determination performed by a user of an apparatus or device incorporating such unit or module. In performing an operation partially automatically, some contribution may be provided or determination may be performed by a user of an apparatus or device incorporating such unit or module.

In addition to those operations specifically stated to be performed automatically, also other operations may be carried completely or partially automatically.

In the case of the second heat pump being an inverter type heat pump, the operation of the second heat pump may be adjusted by controlling the running speed of the second compressor.

If the second heat pump is an on/off type heat pump, the operation of the second heat pump is adjusted by controlling the operating time of the second compressor.

All the operations of the flow chart of FIG. 1 may be carried out simultaneously as a continuous process. However, adjusting the operation of the second heat pump may be considered to be carried out intermittently only, if "adjusting" is understood as changing the operation of the second heat pump. Then, the adjustment may be considered as being carried out in operation 310 only after having determined, in operation 306, a substantial change in the available condensing heat power.

It is to be noted that the embodiments of the claims are not limited to those discussed above, but further embodiments may exist within the scope of the claims.

It will be understood that the benefits and advantages described above may relate to one embodiment or may relate to several embodiments.

It will further be understood that reference to 'an' item refers to one or more of those items.

The term "comprising" is used in this specification to mean including the feature(s) or act(s) followed thereafter, without excluding the presence of one or more additional features or acts.

## Claims

1. A heating system (100) for utilizing condensing heat of a heat extraction arrangement (10) comprising a first heat pump (11) with a first condenser (12) for releasing condensing heat to a heat transfer fluid at the first condenser at a first temperature, the heating system comprising;
- a heat production arrangement (110) comprising a second heat pump (111) with a second evaporator (113), a second condenser (112), and a second compressor (114), configured to release heat for heating purposes to a heating fluid at the second condenser at a second temperature higher than the first temperature; and
- a heat collection arrangement (120) for circulating the heat transfer fluid between the first condenser (12) and the second evaporator (113);
**characterized in that** the heating system comprises a control arrangement (130) configured to adjust the operation of the second heat pump (111) on the basis of the condensing heat power available at the first condenser (12).

2. A heating system (100) as defined in claim 1, the control arrangement (130) comprising a second control unit (131) connected to the second heat pump (111) and being configured to receive one or more electrical signals (134) indicative of the operation of the first heat pump (11); determine the condensing heat power available at the first condenser (12); and adjust the operation of the second heat pump on the basis of the available condensing heat thereby determined.

3. A heating system (100) as defined in claim 1 or 2, wherein the second heat pump (111) is an inverter type heat pump, and the control arrangement (130) is configured to adjust the operation of the second heat pump by controlling the running speed of the second compressor (114).

4. A heating system (100) as defined in claim 1 or 2, wherein the second heat pump (111) is an ON/OFF type heat pump, and the control arrangement is configured to adjust the operation of the second heat pump by controlling the operating time of the second compressor (114).

5. A heating system (100) as defined in any of claims 1 to 4, wherein the heat extraction arrangement (10) is connected to a cooling appliance, such as a domestic or commercial refrigerator, a freezer, a cold-storage room, or a cold cabinet, to extract heat therefrom.

6. A heating system (100) as defined in any of claims 1 to 5, wherein the first heat pump is a CO₂ heat pump.

7. A heating system (100) as defined in any of claims 1 to 6, wherein the heat collection arrangement comprises a by-pass circuit (136) for circulating a by-pass flow of the heat transfer fluid to be additionally heated by an external heat source, and the second control unit (131) is configured to control the by-pass flow on the basis of the condensing heat power available at the first condenser (12).

8. A heating system (100) as defined in any of claims 1 to 7, comprising the heat extraction arrangement (10) as a part thereof.

9. A heating method (300) for utilizing condensing heat of a heat extraction arrangement having a first heat pump with a first condenser for releasing condensing heat to a heat transfer fluid at the first condenser at a first temperature, the method comprising:
- collecting the condensing heat released at a first temperature at a first condenser (303);
- transferring the collected condensing heat to a second evaporator of a second heat pump (304); and
- producing, by the second heat pump, heat released to a heating fluid at a second temperature higher than the first temperature at a second condenser of the second heat pump for heating purposes (305);
**characterized in that** the operation of the second heat pump is automatically adjusted on the basis of the condensing heat power available at the first condenser (310).

10. A method (300) as defined in claim 9, comprising automatically receiving one or more electrical signals indicative of the operation of the first heat pump (306); automatically determining the condensing heat power available at the first condenser on the basis of the received signals (306); and automatically adjusting the operation of the second heat pump on the basis of the available condensing heat thereby determined (310).

11. A method (300) as defined in claim 9 or 10, the second heat pump being an inverter type heat pump, wherein the operation of the second heat pump is adjusted by controlling the running speed of the second compressor.

12. A method (300) as defined in claim 9 or 10, the second heat pump being an ON/OFF type heat pump, wherein the operation of the second heat pump is adjusted by controlling the operating time of the second compressor.

13. A method (300) as defined in any of claims 9 to 12, wherein the heat extraction arrangement is connected to a cooling appliance, such as a domestic or commercial refrigerator, a freezer, a cold-storage room, or a cold cabinet, to extract heat therefrom.

14. A method (300) as defined in any of claims 9 to 13, wherein the first heat pump is a CO₂ heat pump.

15. A method (300) as defined in any of claims 9 to 14, comprising circulating, as automatically controlled on the basis of the condensing heat power available at the first condenser, a by-pass flow of the heat transfer fluid to be additionally heated by an external heat source.

16. A method (300) as defined in any of claims 9 to 15, comprising extracting, by the first heat pump, heat from a space or mass to be cooled, and releasing the condensing heat to the heat transfer fluid at the first condenser at the first temperature.

## Patentansprüche

1. Heizsystem (100) zur Nutzung von Kondensationswärme einer Wärmeextraktionsanordnung (10), umfassend eine erste Wärmepumpe (11) mit einem ersten Kondensator (12) zur Abgabe von Kondensationswärme an ein Wärmeübertragungsfluid am ersten Kondensator bei einer ersten Temperatur, wobei das Heizsystem umfasst;
- eine Wärmeerzeugungsanordnung (110), die eine zweite Wärmepumpe (111) mit einem zweiten Verdampfer (113), einem zweiten Kondensator (112) und einem zweiten Kompressor (114) umfasst, die dazu konfiguriert ist, Wärme zu Heizzwecken an ein Heizfluid am zweiten Kondensator bei einer zweiten Temperatur abzugeben, die höher als die erste Temperatur ist; und
- eine Wärmesammelanordnung (120) zum Zirkulieren des Wärmeübertragungsfluids zwischen dem ersten Kondensator (12) und dem zweiten Verdampfer (113);
**dadurch gekennzeichnet, dass** das Heizsystem eine Steueranordnung (130) umfasst, die dazu konfiguriert ist, den Betrieb der zweiten Wärmepumpe (111) auf der Grundlage der am ersten Kondensator (12) verfügbaren Kondensationswärmeleistung anzupassen.

2. Heizsystem (100) nach Anspruch 1, wobei die Steueranordnung (130) eine zweite Steuereinheit (131) umfasst, die mit der zweiten Wärmepumpe (111) verbunden ist und dazu konfiguriert ist, ein oder mehrere elektrische Signale (134) zu empfangen, die den Betrieb der ersten Wärmepumpe (11) anzeigen; die am ersten Kondensator (12) verfügbare Kondensationswärmeleistung zu bestimmen; und den Betrieb der zweiten Wärmepumpe auf der Grundlage der dadurch bestimmten verfügbaren Kondensationswärme anzupassen.

3. Heizsystem (100) nach Anspruch 1 oder 2, wobei die zweite Wärmepumpe (111) eine Inverter-Typ-Wärmepumpe ist und die Steueranordnung (130) dazu konfiguriert ist, den Betrieb der zweiten Wärmepumpe durch Steuern der Laufgeschwindigkeit des zweiten Kompressors (114) anzupassen.

4. Heizsystem (100) nach Anspruch 1 oder 2, wobei die zweite Wärmepumpe (111) eine EIN/AUS-Typ-Wärmepumpe ist, und die Steueranordnung dazu konfiguriert ist, den Betrieb der zweiten Wärmepumpe durch Steuern der Betriebszeit des zweiten Kompressors (114) anzupassen.

5. Heizsystem (100) nach einem der Ansprüche 1 bis 4, wobei die Wärmeextraktionsanordnung (10) mit einem Kühlgerät, wie etwa einem Haushalts- oder Gewerbekühlschrank, einem Gefrierschrank, einem Kühlraum oder einer Kühlvitrine, verbunden ist, um Wärme daraus zu extrahieren.

6. Heizsystem (100) nach einem der Ansprüche 1 bis 5, wobei die erste Wärmepumpe eine CO₂-Wärmepumpe ist.

7. Heizsystem (100) nach einem der Ansprüche 1 bis 6, wobei die Wärmesammelanordnung einen Bypass-Kreislauf (136) zum Zirkulieren eines Bypass-Stroms des durch eine externe Wärmequelle zusätzlich zu erhitzenden Wärmeübertragungsfluids umfasst, und die zweite Steuereinheit (131) dazu konfiguriert ist, den Bypass-Strom auf der Grundlage der am ersten Kondensator (12) verfügbaren Kondensationswärmeleistung zu steuern.

8. Heizsystem (100) nach einem der Ansprüche 1 bis 7, das die Wärmeextraktionsanordnung (10) als Teil davon umfasst.

9. Heizverfahren (300) zur Nutzung von Kondensationswärme einer Wärmeextraktionsanordnung, die eine erste Wärmepumpe mit einem ersten Kondensator zur Abgabe von Kondensationswärme an ein Wärmeübertragungsfluid am ersten Kondensator bei einer ersten Temperatur aufweist, wobei das Verfahren umfasst:
- Sammeln der bei einer ersten Temperatur an einem ersten Kondensator freigesetzten Kondensationswärme (303);
- Übertragen der gesammelten Kondensationswärme an einen zweiten Verdampfer einer zweiten Wärmepumpe (304); und
- Erzeugen, durch die zweite Wärmepumpe, von an ein Heizfluid bei einer zweiten Temperatur, die höher als die erste Temperatur ist, an einem zweiten Kondensator der zweiten Wärmepumpe abgegebener Wärme zu Heizzwecken (305);
**dadurch gekennzeichnet, dass** der Betrieb der zweiten Wärmepumpe auf der Grundlage der am ersten Kondensator verfügbaren Kondensationswärmeleistung automatisch angepasst wird (310).

10. Verfahren (300) nach Anspruch 9, umfassend: automatisches Empfangen eines oder mehrerer elektrischer Signale, die den Betrieb der ersten Wärmepumpe anzeigen (306); automatisches Bestimmen der am ersten Kondensator verfügbaren Kondensationswärmeleistung auf der Grundlage der empfangenen Signale (306); und automatisches Anpassen des Betriebs der zweiten Wärmepumpe auf der Grundlage der dadurch bestimmten verfügbaren Kondensationswärme (310).

11. Verfahren (300) nach Anspruch 9 oder 10, wobei die zweite Wärmepumpe eine Inverter-Typ-Wärmepumpe ist, wobei der Betrieb der zweiten Wärmepumpe durch Steuern der Laufgeschwindigkeit des zweiten Kompressors angepasst wird.

12. Verfahren (300) nach Anspruch 9 oder 10, wobei die zweite Wärmepumpe eine EIN/AUS-Typ-Wärmepumpe ist, wobei der Betrieb der zweiten Wärmepumpe durch Steuern der Betriebszeit des zweiten Kompressors angepasst wird.

13. Verfahren (300) nach einem der Ansprüche 9 bis 12, wobei die Wärmeextraktionsanordnung mit einem Kühlgerät, wie einem Haushalts- oder Gewerbekühlschrank, einem Gefrierschrank, einem Kühlraum oder einer Kühlvitrine, verbunden ist, um Wärme daraus zu extrahieren.

14. Verfahren (300) nach einem der Ansprüche 9 bis 13, wobei die erste Wärmepumpe eine CO₂-Wärmepumpe ist.

15. Verfahren (300) nach einem der Ansprüche 9 bis 14, umfassend: Zirkulieren, wie es auf der Grundlage der am ersten Kondensator verfügbaren Kondensationswärmeleistung automatisch gesteuert wird, eines Bypass-Stroms des durch eine externe Wärmequelle zusätzlich zu erhitzenden Wärmeübertragungsfluids.

16. Verfahren (300) nach einem der Ansprüche 9 bis 15, umfassend: Extrahieren, durch die erste Wärmepumpe, von Wärme aus einem zu kühlenden Raum oder einer zu kühlenden Masse, und Abgeben der Kondensationswärme an das Wärmeübertragungsfluid am ersten Kondensator bei der ersten Temperatur.

## Revendications

1. Système de chauffage (100) pour utiliser une chaleur de condensation d'un agencement d'extraction de chaleur (10) comprenant une première pompe à chaleur (11) avec un premier condenseur (12) pour libérer une chaleur de condensation dans un fluide de transfert de chaleur au niveau du premier condenseur à une première température, le système de chauffage comprenant :
- un agencement de production de chaleur (110) comprenant une deuxième pompe à chaleur (111) avec un deuxième évaporateur (113), un deuxième condenseur (112), et un deuxième compresseur (114), configuré pour libérer de la chaleur à des fins de chauffage dans un fluide de chauffage au niveau du deuxième condenseur à une deuxième température supérieure à la première température ; et
- un agencement de collecte de chaleur (120) pour faire circuler le fluide de transfert de chaleur entre le premier condenseur (12) et le deuxième évaporateur (113) ;
**caractérisé en ce que** le système de chauffage comprend un agencement de commande (130) configuré pour ajuster le fonctionnement de la deuxième pompe à chaleur (111) sur la base de la puissance thermique de condensation disponible au niveau du premier condenseur (12).

2. Système de chauffage (100) selon la revendication 1, l'agencement de commande (130) comprenant une deuxième unité de commande (131) reliée à la deuxième pompe à chaleur (111) et étant configuré pour recevoir un ou plusieurs signaux électriques (134) indiquant le fonctionnement de la première pompe à chaleur (11) ; déterminer la puissance thermique de condensation disponible au niveau du premier condenseur (12) ; et ajuster le fonctionnement de la deuxième pompe à chaleur sur la base de la chaleur de condensation disponible ainsi déterminée.

3. Système de chauffage (100) selon la revendication 1 ou la revendication 2, dans lequel la deuxième pompe à chaleur (111) est une pompe à chaleur de type onduleur, et l'agencement de commande (130) est configuré pour ajuster le fonctionnement de la deuxième pompe à chaleur en commandant la vitesse de fonctionnement du deuxième compresseur (114).

4. Système de chauffage (100) selon la revendication 1 ou la revendication 2, dans lequel la deuxième pompe à chaleur (111) est une pompe à chaleur de type MARCHE/ARRÊT, et l'agencement de commande est configuré pour ajuster le fonctionnement de la deuxième pompe à chaleur en commandant le temps de fonctionnement du deuxième compresseur (114).

5. Système de chauffage (100) selon l'une quelconque des revendications 1 à 4, dans lequel l'agencement d'extraction de chaleur (10) est relié à un appareil de refroidissement, tel qu'un réfrigérateur domestique ou commercial, un congélateur, une chambre froide ou une armoire frigorifique, pour en extraire de la chaleur.

6. Système de chauffage (100) selon l'une quelconque des revendications 1 à 5, dans lequel la première pompe à chaleur est une pompe à chaleur au CO₂.

7. Système de chauffage (100) selon l'une quelconque des revendications 1 à 6, dans lequel l'agencement de collecte de chaleur comprend un circuit de dérivation (136) pour faire circuler un flux de dérivation du fluide de transfert de chaleur devant être chauffé en outre par une source de chaleur externe, et la deuxième unité de commande (131) est configurée pour commander le flux de dérivation sur la base de la puissance thermique de condensation disponible au niveau du premier condenseur (12).

8. Système de chauffage (100) selon l'une quelconque des revendications 1 à 7, comprenant l'agencement d'extraction de chaleur (10) en tant que partie de celui-ci.

9. Procédé de chauffage (300) pour l'utilisation de chaleur de condensation d'un agencement d'extraction de chaleur présentant une première pompe à chaleur avec un premier condenseur pour libérer une chaleur de condensation dans un fluide de transfert de chaleur au niveau du premier condenseur à une première température, le procédé comprenant :
- la collecte de la chaleur de condensation libérée à une première température au niveau d'un premier condenseur (303) ;
- le transfert de la chaleur de condensation collectée vers un deuxième évaporateur d'une deuxième pompe à chaleur (304) ; et
- la production, par la deuxième pompe à chaleur, de chaleur libérée dans un fluide de chauffage à une deuxième température supérieure à la première température au niveau d'un deuxième condenseur de la deuxième pompe à chaleur à des fins de chauffage (305) ;
**caractérisé en ce que** le fonctionnement de la deuxième pompe à chaleur est automatiquement ajusté sur la base de la puissance thermique de condensation disponible au niveau du premier condenseur (310).

10. Procédé (300) selon la revendication 9, comprenant la réception automatique d'un ou de plusieurs signaux électriques indiquant le fonctionnement de la première pompe à chaleur (306) ; la détermination automatique de la puissance thermique de condensation disponible au niveau du premier condenseur sur la base des signaux reçus (306) ; et l'ajustement automatique du fonctionnement de la deuxième pompe à chaleur sur la base de la chaleur de condensation disponible ainsi déterminée (310).

11. Procédé (300) selon la revendication 9 ou la revendication 10, la deuxième pompe à chaleur étant une pompe à chaleur de type onduleur, dans lequel le fonctionnement de la deuxième pompe à chaleur est ajusté par la commande de la vitesse de marche du deuxième compresseur.

12. Procédé (300) selon la revendication 9 ou la revendication 10, la deuxième pompe à chaleur étant une pompe à chaleur de type MARCHE/ARRÊT, dans lequel le fonctionnement de la deuxième pompe à chaleur est ajusté en commandant le temps de fonctionnement du deuxième compresseur.

13. Procédé (300) selon l'une quelconque des revendications 9 à 12, dans lequel l'agencement d'extraction de chaleur est relié à un appareil de refroidissement, tel qu'un réfrigérateur domestique ou commercial, un congélateur, une chambre froide ou une armoire frigorifique, pour en extraire de la chaleur.

14. Procédé (300) selon l'une quelconque des revendications 9 à 13, dans lequel la première pompe à chaleur est une pompe à chaleur au CO₂.

15. Procédé (300) selon l'une quelconque des revendications 9 à 14, comprenant la circulation, telle que commandée automatiquement sur la base de la puissance thermique de condensation disponible au niveau du premier condenseur, d'un flux de dérivation du fluide de transfert de chaleur devant être chauffé en outre par une source de chaleur externe.

16. Procédé (300) selon l'une quelconque des revendications 9 à 15, comprenant l'extraction, par la première pompe à chaleur, de chaleur à partir d'un espace ou d'une masse à refroidir, et la libération de la chaleur de condensation dans le fluide de transfert de chaleur au niveau du premier condenseur à la première température.
